# EUROPÄISCHE PATENTSCHRIFT

(11) **EP 1 215 785 B1**
(45) Veröffentlichungstag und Bekanntmachung des Hinweises auf die Patenterteilung: **07.06.2006**
(21) Anmeldenummer: 01128823.0
(22) Anmeldetag: 04.12.2001
(51) Int. Cl.: H02B 1/20

(54) **Halter für eine Hakenklemme**
Support for an hook connector
Support pour un connecteur en forme de crochet

(30) Priorität: 15.12.2000 DE 10062634
(43) Veröffentlichungstag der Anmeldung: 19.06.2002
(73) Patentinhaber: Jean Müller GmbH Elektrotechnische Fabrik, 65343 Eltville (DE)
(72) Erfinder:
(74) Vertreter: Quermann, Helmut

(56) Entgegenhaltungen:
- DE-C- 19 836 383
- GB-A- 2 159 343

## Beschreibung

Hakenklemmen dienen der klemmenden Verbindung einer Stromschiene einer Leiste mit einer Sammelschiene. Aus der DE 299 09 238 U1 ist für NH-Sicherungs-Lasttrennleisten eine Sammelschienenkontaktierung bekannt geworden, bei der die Hakenklemme integraler Bestandteil der Leiste bildet. Eine Schraube durchsetzt eine Bohrung in der Stromschiene sowie eine Bohrung in der Hakenklemme und ist in eine Mutter eingeschraubt. Die Hakenklemme ist in Längsrichtung der Schraube geführt in einer Ausnehmung der Stromschiene gehalten. Beim Verschrauben von Schraube und Mutter wird die Sammelschiene zwischen der Stromschiene und der Hakenklemme geklemmt. Aus der DE 196 39 616 A1 ist ein Adapter für Sammelschienen bekannt, bei dem die Hakenklemme gleichfalls integraler Bestandteil des Leistengehäuses ist. In Zustellrichtung der Hakenklemme ist diese im Gehäuse geführt und mittels eines als Gewindebolzen gestalteten Stellgliedes, das in eine Gewindebohrung der Hakenklemme eingeschraubt ist, zustellbar. Der Gewindebolzen stützt sich an der Stromschiene der Leiste ab und bewirkt bei seiner Zustellbewegung die Klemmung zwischen der Stromschiene und der Sammelschiene. Diese Hakenklemme benötigt zwar keine Stromschiene mit Bohrung oder Gewinde, ist aber dennoch von Nachteil, weil bestehende Leistensysteme nicht mit klemmend wirksamen Haken nachgerüstet werden können.

In der DE 299 11 0290 U1 ist bei einem Adapter für Sammmelschienen bekannt, die Hakenklemme in einem Gehäuse reibschlüssig zu positionieren. Die Hakenklemme weist äußere Prägungen, die beispielsweise als Nocken ausgebildet sind, auf, die an Innenflächen des Gehäuses anliegen und die Relativbewegung von Hakenklemme und Gehäuse hemmen. Ist die Stromschiene mittels der Hakenklemme noch nicht geklemmt, verbleibt die Hakenklemme in einer Parkposition im Gehäuse.

Durch DE-C-19836383 ist eine weitere Hakenklemmen nach dem Stand der Technik bekannt.

Aufgabe der Erfindung ist es, einen Halter für eine Hakenklemme anzugeben, der vor dem Erzeugen der Klemmverbindung von Stromschiene und Sammelschiene die Hakenklemme in ihrer geöffneten Stellung fixiert und hierdurch den Montagevorgang der Leiste erheblich vereinfacht. Dieses funktionale Merkmal ist insbesondere unter dem Aspekt der Nachrüstung von Leisten, die ursprünglich nicht für die klemmende Verbindung von Stromschiene und Sammelschienen vorgesehen sind, zu sehen.

Die Erfindung schlägt eine Hakenklemme vor, die der klemmenden Verbindung einer Stromschiene einer Leiste mit einer Sammelschiene dient, wobei ein Halter die Hakenklemme reibschlüssig aufnimmt und im Leistenkörper der Leiste gehalten ist.

Die Erfindung schlägt demnach den ein separates Bauteil bildenden Halter und die gleichfalls ein separates Bauteil bildende Hakenklemme vor, die somit unabhängig von der Leiste sind. Leisten, deren jeweilige Stromschiene mit einer Bohrung oder mit einem Gewinde versehen ist, um die Stromschiene unmittelbar mit der Sammelschiene zu verbinden, können auf einfache Art und Weise im Sinne der klemmenden Verbindung von Stromschiene und Sammelschiene umgerüstet werden. Hierbei findet die separate Hakenklemme Verwendung, die auf die Stromschiene aufgesteckt wird. Da durch das bloße Aufstecken der Hakenklemme auf die Stromschiene keine definierte Position dieser Teile zueinander, insbesondere nicht bei der Montage der Leiste auf der bzw. den Sammelschienen gewährleistet ist, ist der separate Halter vorgesehen, der insbesondere der Positionierung der Hakenklemme in deren geöffneten Position dient. So wird zunächst die Stromschiene entsprechend der Anzahl der Phasen und damit der vorhandenen Stromschienen mit den Hakenklemmen bestückt und auf jede Hakenklemme der Halter aufgesteckt, der die Hakenklemme reibschlüssig aufnimmt. Zweckmäßig wird der Halter beim Aufstecken auf die Hakenklemme unmittelbar in den Leistenkörper eingeschoben, so daß er im Leistenkörper gehalten ist. In dieser fixierten Offenstellung der Hakenklemme bzw. der diversen den Stromschienen zugeordneten Hakenklemmen, wird die Leiste mit den Hakenklemmen auf die Sammelschienen aufgesteckt, und es kann dann die jeweilige Hakenklemme in deren klemmende Position überführt werden. Der der Klemmung dienende Bereich der Hakenklemme wird hierbei in Richtung der Stromschiene verschoben. Dies ist ohne weiteres möglich, weil die Hakenklemme nur reibschlüssig im Halter fixiert ist und demzufolge die Position zum Halter verändert werden kann. Allerdings ist der Halter nach wie vor im Leistenkörper gehalten. Er sollte so gestaltet sein, daß er denjenigen Bereich der Hakenklemme, der die Sammelschiene hintergreift, abdeckt. Insbesondere dann, wenn der Halter aus nicht stromleitendem Material, insbesondere aus Kunststoff besteht, ist durchaus eine Montage der Leiste unter Spannung möglich.

Gemäß einer besonderen Ausführungsform der Erfindung ist vorgesehen, daß die Hakenklemme zwei parallel zueinander angeordnete Hakenbereiche und einen diese verbindenden Steg aufweist. Der Steg ist insbesondere mit einer Gewindebohrung versehen, die eine Stellschraube durchsetzt. Diese nimmt eine zwischen den beiden parallelen Hakenbereichen angeordnete Klemmplatte auf. Die Klemmplatte ist in Wirkverbindung mit der Stromschiene bringbar.

Eine besonders einfach gestaltete Verbindung des Halters mit dem Leistenkörper läßt sich bewerkstelligen, wenn der Halter einen Ansatz aufweist, der in eine Aufnahme des Leistenkörpers einsteckbar ist. Diese ist vorzugsweise schlitzförmig ausgebildet. Es ist insbesondere daran gedacht, daß der Halter im Leistenkörper reibschlüssig gehalten ist.

Weitere Merkmale der Erfindung sind in den Unteransprüchen, der Beschreibung der Figuren und den Figuren selbst dargestellt, wobei bemerkt wird, daß alle Einzelmerkmale und alle Kombinationen von Einzelmerkmalen weitere erfinderische Ausgestaltungen darstellen.

In den Figuren ist die Erfindung anhand eines Ausführungsbeispieles dargestellt, ohne hierauf beschränkt zu sein. Es zeigt in räumlicher Darstellung:
- Figur 1: eine Ansicht des Stromanschlusses einer Phase einer Leiste, unter Verwendung einer Hakenklemme, in einer Vorderansicht,
- Figur 2: eine Ansicht des in Figur 1 gezeigten Stromanschlusses, in Verbindung mit einem Abschnitt der Leiste, sowie dem Halter für die Hakenklemme, vor dem Aufstecken des Halters, in einer Vorderansicht,
- Figur 3: die in Figur 2 gezeigten Bauteile, in der Stellung gemäß Figur 2, in einer Rückansicht,
- Figur 4: die in den Figuren 2 und 3 gezeigten Bauteile, bei aufgestecktem Halter, schräg von unten gesehen,
- Figur 5: eine Ansicht der Bauteile gemäß Figur 4, gezeigt in klemmender Verbindung mit einer Sammelschiene,
- Figur 6: die Anordnung gemäß Figur 5, schräg von oben gesehen.

Die Erfindung bezieht sich insbesondere auf NH-Sicherungs- oder - Lastschalteinrichtungen, bei denen die der entsprechenden Phase zugeordneten Stromschienen in leitender Verbindung mit einer entsprechenden Anzahl von Sammelschienen stehen. Das Ausführungsbeispiel betrifft eine leistenförmige NH-Sicherungsschalteinrichtung. Das teilweise dargestellte Gehäuseunterteil 1 der Leiste 2 ist mit einer Aussparung 3 zur Aufnahme einer Stromschiene 4 versehen. Diese ist zweifach entgegengerichtet jeweils im rechten Winkel abgewinkelt, so daß Schienenabschnitte 5, 6 und 7 gebildet sind. Ein Kontaktkörper 8 zur Aufnahme eines Kontaktes eines NH-Sicherungseinsatzes ist mit dem Schienenabschnitt 5 der Stromschiene 4 verbunden, die ihrerseits mit dem Gehäuseunterteil 1 verbunden ist. Dieses besteht aus Kunststoff. Der Schienenabschnitt 6 ist in Tiefenerstreckung des Gehäuseunterteils 1 gerichtet. Der parallel zum Schienenabschnitt 5 verlaufende Schienenabschnitt 7 ist im Bereich der Unterseite 9 des Gehäuseunterteiles 1 positioniert und dient der Aufnahme einer Hakenklemme 10. Mittels dieser läßt sich die klemmende Verbindung zwischen der Stromschiene 4 im Bereich des Schienenabschnittes 7 und einer Sammelschiene 11 herstellen.

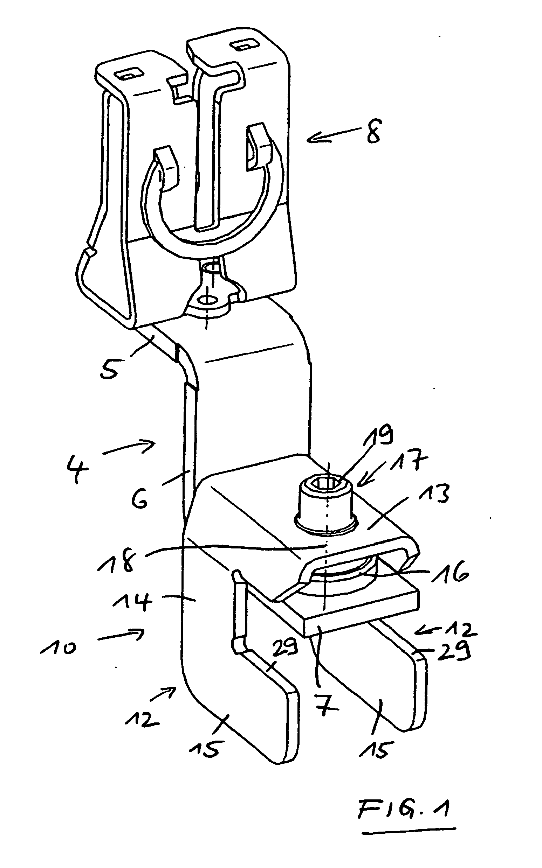

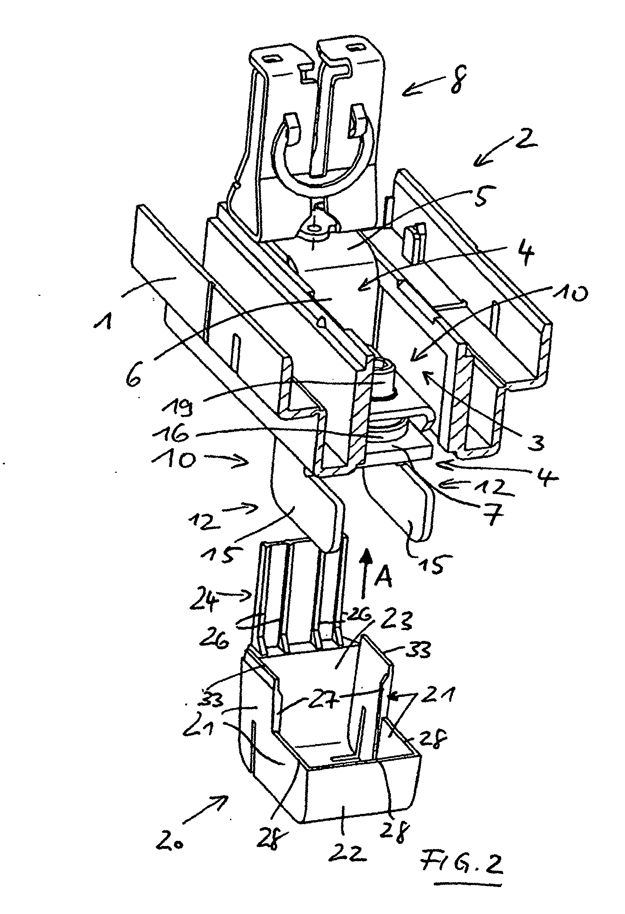

Die Hakenklemme 10 weist zwei parallel zueinander angeordnete, L-förmige Hakenbereiche 12 und einen diesen verbindenden Steg 13 auf. Der eine Abschnitt 14 des Hakenbereiches 12 ist senkrecht zum Steg 13 positioniert und verbindet diesen mit dem anderen Abschnitt 15 des Hakenbereiches 12, der parallel zum Steg 13 positioniert ist. Der lichte Abstand der Abschnitte 15 zum Steg 13 ist etwas größer als die Stärke der Sammelschiene 11. Zwischen den Hakenbereichen 12 ist im Bereich des Steges 13 eine kreisförmige Klemmplatte 16 parallel zum Steg 13 angeordnet, die über eine Schraubverbindung 17 in Längsrichtung der Achse 18, somit senkrecht zur Ebene des Steges 13, zustellbar ist. Figur 1 veranschaulicht die auf den Schienenabschnitt 7 der Stromschiene 8 aufgelegte Hakenklemme 10 in einer Stellung der Klemmplatte 16, in der diese weitgehend durch Drehen einer Stellschraube 19 der Schraubverbindung 17 dem Steg 13 angenähert ist. Aus Gründen zeichnerischer Klarheit ist in dieser Figur das Gehäuseunterteil 1 nicht mit veranschaulicht, sondern nur in der Darstellung der Figur 2.

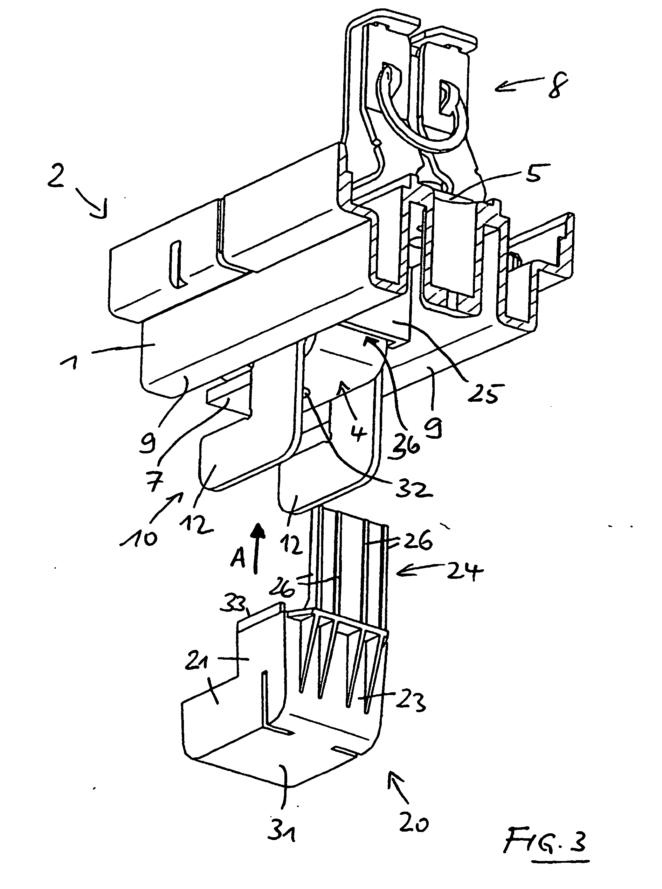

Wie den Figuren 2 und 3 zu entnehmen ist, wird vor dem Montieren der Leiste 2 auf den Sammelschienen im Bereich der jeweiligen Phase die Hakenklemme 10 lose auf den Schienenabschnitt 7 der Stromschiene 4 aufgelegt. Um die Hakenklemme 10 in dieser Position bezüglich des Gehäuseunterteiles 1 zu fixieren, ist der separate Halter 20 vorgesehen, der reibschlüssig mit der Hakenklemme 10 verbunden wird und in dieser Stellung im Leistenunterteil 1 gehalten ist. Der Halter 20 ist kastenartig ausgebildet, mit seitlichen L-förmigen Wandungsbereichen 21, diese verbindenden Wandungsbereichen 22 und 23, sowie einen Boden 31. Der Halter 20 weist einen Ansatz 24 auf, der in der Ebene des Wandungsabschnittes 23 mit diesem verbunden ist. Der Halter 20 besteht aus Kunststoff und ist als Spritzgußteil ausgebildet.

Zum Montieren des Halters 20 am Gehäuseunterteil 1 und der Hakenklemme 10 wird das Leistenunterteil 1 mit einer Hand im Bereich der Hakenklemme 10 ergriffen, wobei ein Finger die Hakenklemme 10 gegen den Schienenabschnitt 7 der Stromschiene 4 drückt.

Mit der anderen Hand wird, ausgehend von der Position, die in den Figuren 2 und 3 verdeutlicht ist, der Halter 20 in Richtung des Pfeiles A bewegt. Hierbei wird der flache Ansatz 24 des Halters 20 in den zwischen dem Schienenabschnitt 6 und einem parallel hierzu angeordneten Wandungsabschnitt 25 des Leistenunterteils 1 gebildeten Spalt 36 eingeschoben und gleichzeitig der kastenförmige Bereich des Halters 20 auf die Hakenbereiche 12 der Hakenklemme 10 aufgeschoben. Der Ansatz 24 ist mit Vorsprüngen 26 versehen, die sich zum freien Endes des Ansatzes 24 hin verjüngen. Die Stärke der Vorsprünge 26 ist so bemessen, daß der Ansatz 24 beim Einführen in den Spalt 36 zwischen dem Wandungsabschnitt 25 und der Stromschiene 4 geklemmt wird. Beim Aufstecken des Halters 20 auf die Hakenklemme 10 wird des weiteren eine reibschlüssige Verbindung zwischen den Außenwandungen der Abschnitte 15 der Hakenklemme 10 und den Wandungsbereichen 21 des Halters 20 erzielt, die auf den einander zugewandten Seiten mit Vorsprüngen 27 versehen sind. Der Wandungsbereich 22 des Halters 20 deckt die vorderen Enden der Abschnitte 15 der Hakenklemme 10 und der Wandungsbereich 23 die hinteren Enden der Abschnitte 14 der Hakenklemme 10 ab. Bei aufgestecktem Halter 20 kontaktiert dieser mit seinen Kanten 33 das Gehäuseunterteil 1.

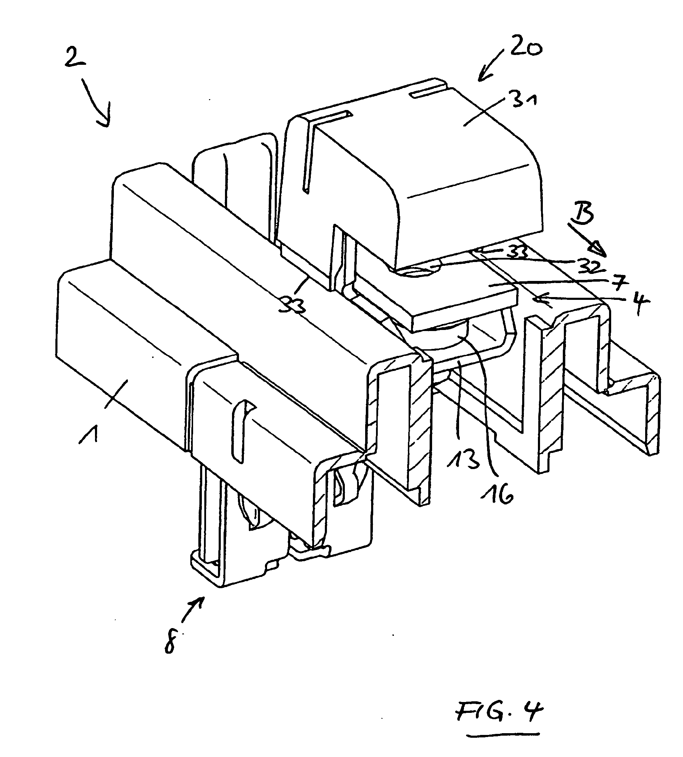

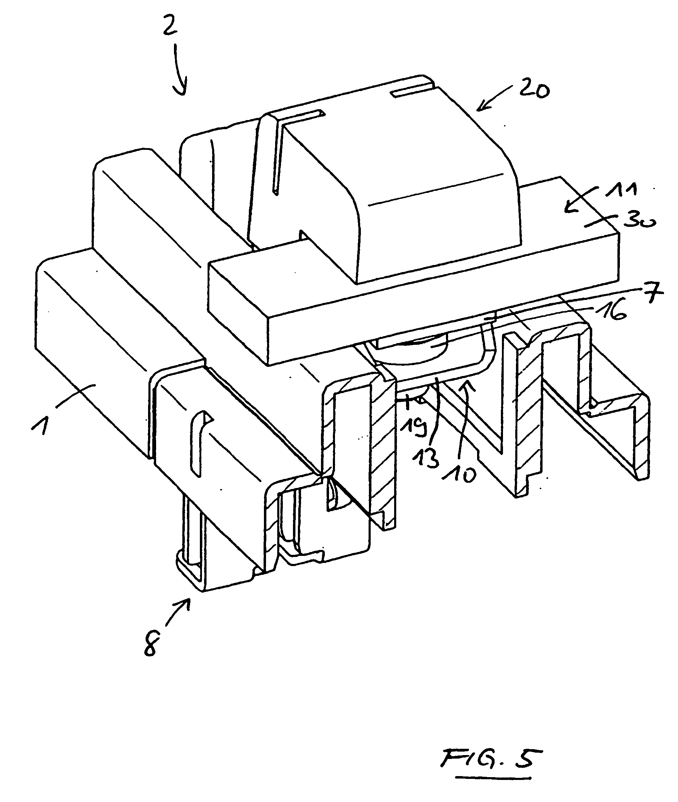

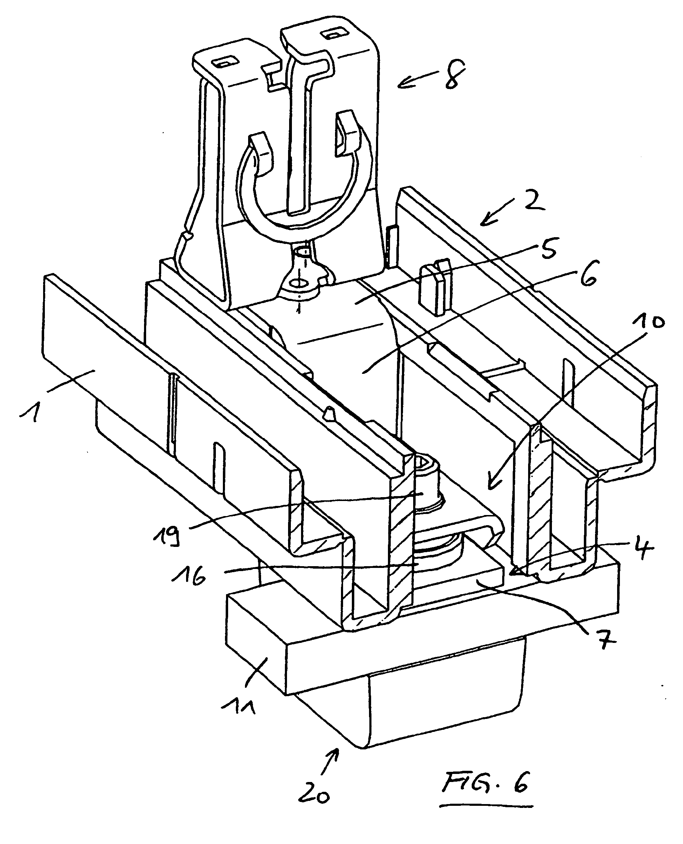

Bei auf die Hakenklemme 10 aufgestecktem Halter 20 ist die Hakenklemme 10 relativ zum Schienenabschnitt 7 der Stromschiene 4 fixiert, wobei aufgrund der manuellen Einwirkung auf die Hakenklemme 10 beim Montieren des Halters 20 der Steg 20 der Hakenklemme 10 relativ nahe zum Schienenabschnitt 7 positioniert ist und nach erfolgter Montage des Halters 20 die U-förmig angeordnete oberen Kante 28 etwa auf demselben Niveau zu liegen kommt wie die obere Kante des jeweiligen Abschnittes 15 der Hakenklemme 10. Ausgehend von dieser Stellung, wie sie in der Figur 4 veranschaulicht ist, wird die Leiste 2 in Richtung des Pfeiles B auf die Sammelschienen aufgeschoben. Die aufgeschobene Position ist für den Bereich einer Sammelschiene 11 der Sammelschienenanordnung in den Figuren 5 und 6 veranschaulicht. Zum Erzeugen der klemmenden Verbindung von Sammelschiene 11 und Stromschiene 4 im Bereich des Schienenabschnittes 7 wird die Klemmplatte 16 mittels der Stellschraube 19 zugestellt. Hierbei bewegt sich die Hakenklemme 10, konkret deren Steg 13, von dem Schienenabschnitt 7 weg und es kontaktieren die Hakenbereiche 12 der Hakenklemme 10 im Bereich deren Kanten 29 die Unterseite 30 der Sammelschiene 11. Bei dieser Verspannbewegung wird die Hakenklemme 10 somit geringfügig relativ zum Halter 20 in Richtung des Pfeiles A bewegt.

Die Leiste 2 kann durchaus herkömmlich gestaltet sein, das heißt mit Stromschienen 4, deren Stromabschnitte 7 mit Bohrungen 32 versehen sind, zum Befestigen der Stromschiene 4 mittels einer Schraubverbindung mit der zugeordneten Sammelschiene 11. Soll eine solche Befestigung nicht erfolgen, kann die Leiste 2 auf einfache Art und Weise nachgerüstet werden, indem die Kontaktierung von Stromschiene 4 und Sammelschiene 11 mittels der Hakenklemme 10 unter Verwendung des Halters 20 erfolgt. Herkömmliche Leisten sind somit einfach nachrüstbar.

## Patentansprüche

1. System, bestehend aus einem Halter (20) und einer Hakenklemme (10), wobei die Hakenklemme (10) Mittel zur klemmenden Verbindung einer Stromschiene (4) einer Leiste (2) mit einer Sammelschiene (11) aufweist, wobei der Halter (20) die Hakenklemme (10) reibschlüssig aufnimmt und im Leistenkörper (1) der Leiste (2) gehalten ist.

2. System nach Anspruch 1, wobei der Halter (20) der Aufnahme des Hakenbereiches (12) der Hakenklemme (10) dient.

3. System nach Anspruch 1 oder 2, wobei die Hakenklemme (10) zwei parallel zueinander angeordnete Hakenbereiche (12) und einen diese verbindenden Steg (13) aufweist.

4. System nach Anspruch 3, wobei der Steg (13) eine Gewindebohrung aufweist, die eine Stellschraube (19) durchsetzt, die eine zwischen den beiden parallelen Hakenbereichen (12) angeordnete Klemmplatte (16) aufnimmt, wobei die Klemmplatte (16) in Wirkverbindung mit der Stromschiene (4) bringbar ist.

5. System nach einem der Ansprüche 1 bis 4, wobei der Halter (20) kastenartig ausgebildet ist, und in einer vormontierten Stellung des Halters (20) die Hakenklemme (10) außen abdeckt.

6. System nach einem der Ansprüche 1 bis 5, wobei der Halter (20) einen Boden (31) und allseitige Wandungen (21, 22, 23) aufweist, die die Hakenklemme (10) außen abdecken.

7. System nach Anspruch 6, wobei Wandungsabschnitte (21, 27) des Halters (20) die in diesen eingesteckte Hakenklemme (10) reibschlüssig kontaktieren.

8. System nach einem der Ansprüche 1 bis 7, wobei der Halter (20) einen Ansatz (24) aufweist, der in eine Aufnahme (36) des Leistenkörpers (1) einsteckbar ist.

9. System nach einem der Ansprüche 1 bis 8, wobei der Halter (20) im Leistenkörper (1) reibschlüssig gehalten ist.

10. System nach einem der Ansprüche 1 bis 9, wobei der Halter (20) aus Kunststoff besteht, insbesondere als Spritzgußteil ausgebildet ist.

## Claims

1. System, comprising a holder (20) and a hook connector (10), whereby the hook connector has means of clamping connection of a live rail (4) of a bar (2) to a collection bar (11), whereby the holder (10) takes up the hook connector (10) by means of frictional locking and is held in the body (1) of the bar (2).

2. System in accordance with claim 1, whereby the holder (20) serves to take up the hook area (12) of the hook connector (10).

3. System in accordance with claims 1 or 2, whereby the hook connector (10) has two parallel hook areas (12) and a crosspiece (13) connecting them.

4. System in accordance with claim 3, whereby the crosspiece (13) has a threaded boring, through which an adjustment bolt (19) passes, the said bolt (19) taking up the clamping plate (16) disposed between the two parallel hook areas (12, whereby the clamping plate (16) can be brought into operative connection with the live rail (4).

5. System in accordance with claims 1 to 4, whereby the holder (20) is in the form of a box and covers, in the pre-mounted position of the holder (20), the hook connector (10) from outside.

6. System in accordance with one of claims 1 to 5, whereby the holder (20) has a base (31) and surrounding sides (21, 22, 23) that cover the hook connector (10) on the outside.

7. System in accordance with claim 6, whereby the surface sections (21, 27) of the holder (20) are locked frictionally against the hook connector (10) that is inserted into it.

8. System in accordance with one of claims 1 to 7, whereby the holder (20) has an abutment means (24) that can be inserted into an uptake means (36) of the body of the bar (1).

9. System in accordance with one of claims 1 to 8, whereby the holder (20) is frictionally held in the body (1) of the bar.

10. System in accordance with one of claims 1 to 9, whereby the holder (20) is made of plastic and is, in particular, in the form of an injection moulding.

## Revendications

1. Système, composé d'un support (20) et d'un connecteur en forme de crochet (10), le connecteur en forme de crochet (10) présentant des moyens pour relier par serrage un rail conducteur (4) d'une baguette (2) avec une barre collectrice (11), le support (20) recevant par pression le connecteur en forme de crochet (10) en étant maintenu dans le corps (1) de la baguette (2).

2. Système selon la revendication 1,
dans lequel
le support (20) sert à la réception de la zone en forme de crochet (12) du connecteur en forme de crochet (10).

3. Système selon la revendication 1 ou 2,
dans lequel
le connecteur en forme de crochet (10) présente deux zones parallèles en forme de crochet (12) parallèle et une barrette (13) reliant celles-ci.

4. Système selon la revendication 3,
dans lequel
la barrette (13) présente un trou taraudé qui traverse une vis de réglage (19) recevant une plaque à friction (16) disposée entre les deux zones parallèles en forme de crochet (12), la plaque à friction (16) pouvant être amenée en liaison active avec le rail conducteur (4).

5. Système selon l'une des revendications 1 à 4,
dans lequel
le support (20) à forme d'un caisson et recouvre à l'extérieur le connecteur en forme de crochet (10) dans une position prémontée du support (20).

6. Système selon l'une des revendications 1 à 5,
dans lequel
le support (20) présente un fond (31) et des parois de tous les côtés (21, 22, 23) qui recouvrent à l'extérieur le connecteur en forme de crochet (10).

7. Système selon la revendication 6,
dans lequel
des parties de paroi (21, 27) du support (20) sont en contact par friction avec le connecteur en forme de crochet (10) enfiché dans celui-ci.

8. Système selon l'une des revendications 1 à 7,
dans lequel
le support (20) présente un épaulement (24) qui peut être enfiché dans une réception (36) du corps (1) de la baguette.

9. Système selon l'une des revendications 1 à 8,
dans lequel
le support (20) est maintenu par friction dans le corps (1) de la baguette.

10. Système selon l'une des revendications 1 à 9,
dans lequel
le support (20) est en matière plastique, et en particulier est une pièce injectée.
